# EUROPEAN PATENT APPLICATION

(11) **EP 2 720 100 A1**
(43) Date of publication of application: **16.04.2014**
(21) Application number: 13187494.3
(22) Date of filing: 07.10.2013
(51) Int. Cl.: G05B 23/02

(54) **Systems and methods for comprehensive alarm management**

(30) Priority: 10.10.2012 US 201213648668
(71) Applicant: General Electric Company, Schenectady, New York 12345 (US)
(72) Inventor: Shaw, Richard William, Salem, VA 24153 (US); Romanik, Christina Ann, Salem, VA 24153 (US); Szudajski, Thomas, Salem, VA 24153 (US)
(74) Representative: Picker, Madeline Margaret

(57) **Abstract**

Systems and methods for comprehensive alarm management can be provided. In one embodiment, a system 100 for monitoring subsystems 110 can be provided. The system 100 can include at least one memory 154 configured to store computer-executable instructions; and at least one processor 152 configured to access the at least one memory 154 and execute the computer-executable instructions. The instructions can be configured to receive alarm information or information suitable for use in generating alarms from one or more sensors, devices or computing devices associated with a respective subsystem 110 within the system 100. The instructions can be further configured to determine one or more alarm events based at least in part upon the alarm information, and generate one or more alarm messages based at least in part on the alarm events. The instructions can further be configured to display a subset of the alarm messages based at least upon a selection of one or more classifying criteria.

## Description

Embodiments of the disclosure relate generally to alarm management, and more particularly, to systems and methods for comprehensive alarm management.

Generally, an alarm system may be used to monitor a subsystem by collecting monitoring data in order to identify if a potentially dangerous condition exists. The alarm system may then generate a message to notify an operator of the impending issue. However, often times, hundreds of alarm messages may be generated in a given period, resulting in an alarm flood. In such instances, prioritizing alarm messages can be a concern.

Some or all of the above needs and/or problems may be addressed by certain embodiments of the disclosure. According to one embodiment of the disclosure, there is disclosed a system for monitoring one or more subsystems. The system may include at least one memory configured to store computer-executable instructions; and at least one processor configured to access the at least one memory and execute the computer-executable instructions. The instructions can be configured to receive alarm information suitable for use in generating alarms from one or more sensors, devices or computing devices associated with a respective subsystem within the system. The instructions may further be configured to determine one or more alarm events for each subsystem based at least in part upon the alarm information, and generate one or more alarm messages based at least in part on the one or more alarm events. The instructions may further be configured to display a subset of the alarm messages based at least upon a selection of one or more classifying criteria.

According to another embodiment of the disclosure, there is disclosed a method for monitoring a system. The method can include receiving alarm information or information suitable for use in generating alarms from one or more sensors, devices or computing devices associated with a respective subsystem within a system. The method can further include determining one or more alarm events for each subsystem based at least in part upon the alarm information and generating one or more alarm messages based at least in part on the one or more alarm events. The method can further include displaying a subset of the one or more alarm messages based at least upon a selection of one or more classifying criteria.

Other embodiments, systems, methods, aspects, and features of the disclosure will become apparent to those skilled in the art from the following detailed description, the accompanying drawings, and the appended claims.

The detailed description is set forth with reference to the accompanying drawings, which are not necessarily drawn to scale.
FIG. 1 is a block diagram of one example system that facilitates alarm management of monitored subsystems, according to an illustrative embodiment of the disclosure.
FIG. 2 is a flow diagram of an example method for managing alarms of one or more monitored subsystems according to an illustrative embodiment of the disclosure.

Illustrative embodiments of the disclosure will now be described more fully hereinafter with reference to the accompanying drawings, in which some, but not all embodiments of the disclosure are shown. The disclosure may be embodied in many different forms and should not be construed as limited to the embodiments set forth herein; rather, these embodiments are provided so that this disclosure will satisfy applicable legal requirements.

Certain embodiments described herein relate to systems and methods for monitoring subsystems to facilitate one or more alarm management functions, such as, for instance, alarm prioritization. Monitored subsystems may include, for illustrative purposes only, a piece or type of equipment utilized in conjunction with a power plant or other facility. In various embodiments, the subsystems may be monitored in order to collect alarm information, which may be analyzed to determine if an alarm event exists. Based on at least these determinations, one or more suitable alarm messages may be generated to alert an operator of the alarm event, where alarm messages for each subsystem may be aggregated and organized according to one or more classifying criteria. Accordingly, a single coordinated system may be provided that processes alarm information on a system-wide basis to generate alarm messages which may be displayed as a subset of alarm messages based upon a selection of the one or more classifying criteria. As such, alarm messages may be organized and prioritized, thereby minimizing, and in some instances eliminating, alarm floods as will be described in more detail below.

The technical effects of certain embodiments may include identifying alarm events using aggregated alarm information to generate alarm messages, which may be classified, organized and prioritized. By doing so, alarm message volume may be decreased, thereby improving the productivity of alarm monitors and/or operators.

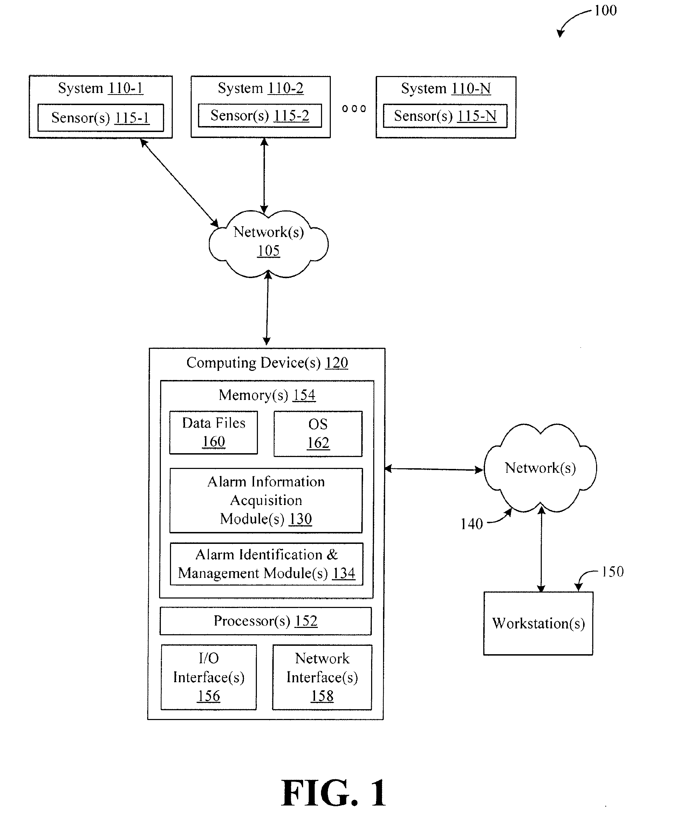

FIG. 1 depicts a block diagram of one example system 100 that facilitates the monitoring of one or more subsystems according to an illustrative embodiment of the disclosure. The system 100 may include one or more subsystems 110-1 through 110-N (referred to as "subsystem(s) 110"), one or more sensors 115-1 through 115-N (referred to as sensor(s) 115") and one or more computing devices 120 for which alarm management on a system-wide basis may be implemented. In certain embodiments, the computing device 120 may be used for monitoring and/or controlling one or more of the subsystems 110 in system 100.

As shown in FIG. 1, each of the subsystems 110 may include one or more sensors 115, that may be used to, for instance, monitor a piece of equipment. As desired, the sensors 115 may be positioned or mounted onto the piece of equipment and configured to collect alarm information that includes information, data and/or measurements that may be used to determining whether one or more alarm events or conditions are present. In operation, the sensors 115 may collect, at predefined intervals, alarm information, such as, temperature values or pressure measurements and provide the alarm information to the computing device 120 using any number of suitable methods or techniques.

For example, collected alarm information may be communicated to the computing device 120 and/or intermediary devices in communication with the computing devices 120 via any number of suitable networks 105, such as a local area network, a wide area network, a Foundation Fieldbus network, a Bluetooth-enabled network, a Wi-Fi enabled network, a radio frequency network, and/or any other suitable network. As another example, direct communication links may be utilized to facilitate communication of alarm information from the sensors 115 to the computing device 120. Additionally, in certain embodiments, the alarm information may be communicated in real-time or near real-time as the alarm information or other data is collected. In other embodiments, the alarm information may be stored and either periodically communicated to the computing devices 120 or communicated in response to some other trigger.

As desired, the computing device 120 may be in communication with any number of workstations 150, or external control systems (e.g., a supervisory control and data acquisition ("SCADA") system, etc.) via one or more suitable networks 140, such as the Internet, a propriety communications networks, or another wide area network. The computing device 120 may include any number of suitable computer processing components that may, among other things, facilitate processing of alarm information to determine whether one or more potentially dangerous alarm events and/or other alarm situations are present. As an example, an alarm event may be an operational problem for a piece of equipment which requires immediate attention by an operator. Suitable processing devices that may be incorporated into the computing device 120 include, but are not limited to, personal computers, server computers, application-specific circuits, microcomputing devices, minicomputers, other computing devices, and the like. As such, the computing device 120 may include any number of processors 152 that facilitate the execution of computer-readable instructions. By executing computer-readable instructions, the computing device 120 may include or form a special purpose computer or particular machine that facilitates the processing of alarm information to provide, for instance, protection for one or more pieces of equipment associated with each of the subsystems 110.

In addition to one or more processor(s) 152, the computing device 120 may include one or more memory devices 154, one or more input/output ("I/O") interfaces 156, and/or one or more communications and/or network interfaces 158. The one or more memory devices 154 or memories may include any suitable memory devices, for example, caches, read-only memory devices, random access memory devices, magnetic storage devices, etc. The one or more memory devices 154 may store the alarm information or other data, executable instructions, and/or various program modules utilized by the computing device 120, for example, data files 160, an operating system ("OS") 162, an alarm information acquisition module 130 and/or an alarm identification and management module 134. The data files 160 may include any suitable data that facilitates the operation of the computing device 120 including, but not limited to, alarm information for each of the subsystems 110 collected and/or received from sensors 115, operational data associated with any subsystem 110, information associated with identified alarm events, information associated with generated alarm messages and/or information associated with one or more classifying criteria for classifying one or more alarm messages and/or information associated with one or more control actions directed by the computing device 120.

The OS 162 may include computer-executable instructions and/or program modules that may facilitate the execution of other software programs and/or program modules by the processors 152, such as, the alarm information acquisition module 130 and/or the alarm identification and management module 134. The alarm information acquisition module 130 may be a suitable software module configured to collect, extract and/or store live and/or historic alarm information associated with each of the subsystems 110. For instance, the alarm information acquisition module 130 may collect alarm information, such as, measurement data from the sensors 115 to the computing device 120 at one or more predefined intervals, where the alarm information may be aggregated and stored in memory 154, for further processing as described below.

Thereafter, a predefined intervals or in response to some other trigger, the alarm identification and management module 134 may be executed to evaluate the alarm information in real-time or near-real time to determine whether any potentially dangerous alarm events or conditions of the subsystems 110 may potentially exist and/or is occurring. For instance, the alarm identification and management module 134 may be configured to evaluate the alarm information, such as measurement values, for the subsystems 110 and determine if the measurement values are below or above a predefined threshold. If so, the alarm identification and management module 134 may identify an alarm event.

As another example, the alarm identification and management module 134 may be configured to make more complex alarm assessments by comparing live alarm information to historic alarm information to identify alarm events. For instance, if measurement values in live alarm information are higher than measurement values in historic alarm information, then the alarm identification and management module may identify an escalation of a particular alarm event.

Upon identifying an alarm event, the alarm identification and management module 134 may be configured to generate an alarm message for the alarm event. The alarm message may include a description of the alarm event based upon the alarm information and/or other information associated with the subsystem 110. The alarm message may be stored in association with the alarm identification in memory 154. Additionally, the alarm identification and management module 134 may be configured to generate a time stamp for each alarm message to store in memory 154 in association with each alarm message. As such, corresponding alarm information, an alarm message and a time stamp may be stored in memory 154 for each alarm event on a system-wide basis.

In some embodiments, the alarm identification and management module 134 may be configured to communicate all alarm messages to control and/or supervisory personnel and/or systems. For example, an email or short message system ("SMS") alert may be communicated to an operator or technician associated operating one or more subsystems 110. Additionally, the alarm identification and management module 130 may direct execution of any number of suitable control actions. For example, the alarm identification and management module 134 may power down the equipment and/or schedule maintenance for the subsystem 110.

In other embodiments, the alarm identification and management module 134 may organize alarm messages into one or more categories based on one or more classifying criteria. For instance, alarm messages may be organized by subsystem 110, time stamp, or by type of alarm event identified. Additionally, the alarm identification management module 134 may be configured to display one or more alarm messages so that only alarm message are displayed according to one or more classifying criteria's, Such prioritization may be predefined and hard-coded, or may be a setting that is adjustable by an operator of the equipment or a monitoring system.

For example, an operator of workstation 150 may decide to view all alarm messages that have been provided by alarm identification and management module 134. The workstation 150 may be a suitable processor-driven device configured to facilitate interaction with a user. For example, a workstation 150 may facilitate the presentation of alarm messages or other alarm information to a user. As desired, a workstation 150 may have components similar to those described above for the computing device 120. For example, the workstation 150 may include one or more processors, memories, I/O interfaces, and/or network interfaces.

In operation, the operator may choose to show a subset of the prioritized alarm messages, for example, by selecting a classifying criteria or some other variation of prioritized results in order to filter the alarm messages. To do so, the workstation 150 may receive alarm information and/or alarm messages from computing device 120 via network 140. In this regard, user commands may be received by the computing device 120, and information may be displayed and/or otherwise output to a user. The one or more communications or network interfaces 158 may facilitate connection of the computing device 120 to any number of suitable networks 140, such as one or more networks that facilitate communication with the sensors 115 and/or the one or more networks 140 that facilitate communication with the workstations 150. By doing so, redundant alarms may be concatenated to reduce the alarm volume and increase productivity of the alarm monitors and/or operators while simultaneously increasing the chances of detecting actual events.

As desired, embodiments of the disclosure may include a system 100 with more or less than the components illustrated in FIG. 1. Additionally, certain components of the system 100 may be combined in various embodiments of the disclosure. The system 100 of FIG. 1 is provided by way of example only.

The example system 100 shown in FIG. 1 is provided by way of example only. Numerous other operating environments, system architectures, and device configurations are possible. For example, any number of parameters for each piece of equipment or subsystem 110 may be monitored and/or recorded. Additionally, while the system 100 is described in FIG. 1 with reference to alarm management of equipment/assets of a power plant, the system and methods described herein may be implemented to manage alarms for equipment/assets of any type of facility or industry, such as, but not limited to, aviation equipment, aircraft manufacturing plants, health management equipment, etc. Accordingly, embodiments of the present disclosure should not be construed as being limited to any particular operating environment, system architecture, or device configuration.

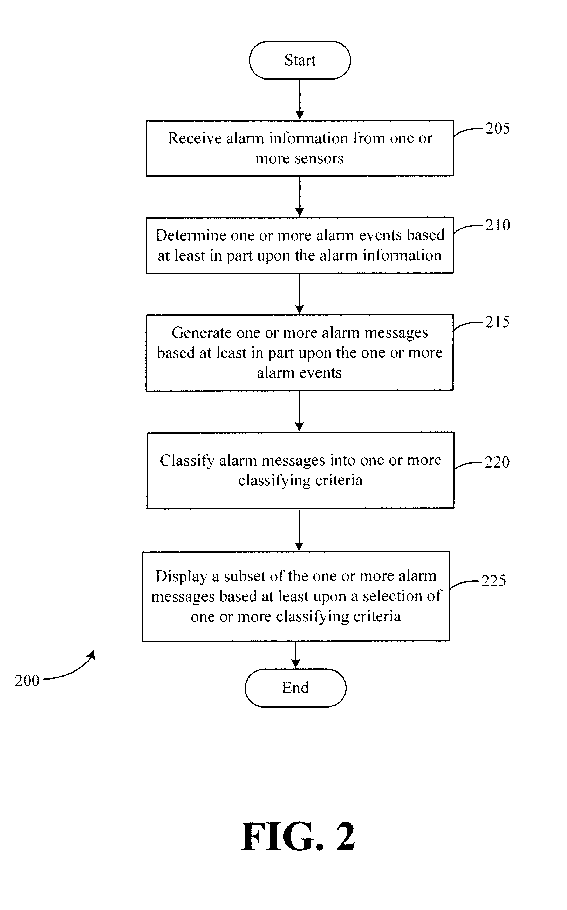

Referring now to FIG. 2, shown is a flow diagram of an example method 200 for monitoring subsystems that facilitates alarm management, according to an illustrative embodiment of the disclosure. The method 200 may be utilized in association with various systems, such as the system 100 illustrated in FIG. 1. In certain embodiments, the operations of the method 200 may be performed by a suitable computing device, such as the computing device 120 illustrated in FIG. 1.

The method 200 may begin at block 205. At block 205, alarm information may be collected and/or otherwise obtained. The alarm information may include measurement data, such as, for instance, vibration data, collected by a plurality of sensors configured to monitor a subsystem, such as, the sensors 115 configured to monitor each of the subsystems 110 illustrated in FIG. 1. As desired, the plurality of sensors may include a wide variety of different types of sensors, such as accelerometers and/or proximity sensors associated with a piece of equipment of the subsystems 110. As described above, such alarm information may be stored in a memory location, such as memory 154.

Next, at block 210, one or more alarm events may be identified for one or more subsystems based at least in part on the alarm information. For instance, the alarm identification and management module 134 may process the alarm information to identify, for example, a contextual alarm event, such as, a particular operational problem associated with the equipment of a subsystem. In other instances, live alarm information and historic alarm information may be compared or to make more complex alarm assessments, such as, whether an alarm event has escalated over a period of time.

Thereafter, at block 215, for each alarm event identified, one or more alarm messages may be generated. As desired, alarm messages may be communicated to any number of operators, technicians, and/or other recipients associated with the operating one or more subsystems.

Next, at block 220, the alarm messages may be aggregated and classified into one or more classifying criteria for organizing and/or prioritizing alarm messages of the subsystems 110 for display on or more display devices. For instance, alarm messages may be classified according to time stamps, subsystem, or type of alarm events.

Following block 220, at block 225, a subset of alarm messages may be displayed to a user based upon the selection of one or the classifying criteria's. In this way, alarm messages may be managed and provide an operator or monitor the ability to view a subset of the alarm messages. Preparation of the display results may include converting a subset of alarm messages into a displayable format, creating or populating a user interface so the results can be displayed, transmitting the results to a display device, and/or rendering the results on a screen of a display device.

The method 200 of FIG. 2 may optionally end following block 225.

The operations described and shown in the method 200 of FIG. 2 may be carried out or performed in any suitable order as desired in various embodiments of the disclosure. Additionally, in certain embodiments, at least a portion of the operations may be carried out in parallel. Furthermore, in certain embodiments, less than or more than the operations described in FIG. 2 may be performed. As desired, the operations set forth in FIG. 2 may also be performed in a loop as a rotating machine is monitored. For example, the operations may be performed every twenty minutes.

The disclosure is described above with reference to block and flow diagrams of systems, methods, apparatus, and/or computer program products according to example embodiments of the disclosure. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the disclosure.

These computer-executable program instructions may be loaded onto a general purpose computer, a special purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the disclosure may provide for a computer program product, comprising a computer usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special purpose, hardware-based computer systems that perform the specified functions, elements or steps, or combinations of special purpose hardware and computer instructions.

While the disclosure has been described in connection with what is presently considered to be the most practical and various embodiments, it is to be understood that the disclosure is not to be limited to the disclosed embodiments, but on the contrary, is intended to cover various modifications and equivalent arrangements included within the spirit and scope of the appended claims.

This written description uses examples to disclose the disclosure, including the best mode, and also to enable any person skilled in the art to practice the disclosure, including making and using any devices or systems and performing any incorporated methods. The patentable scope of the disclosure is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for monitoring a system, comprising:
   receiving alarm information or information suitable for use in generating alarms from one or more sensors, devices or computing devices associated with a respective one of at least one subsystem within the system;
   determining one or more alarm events for each of the at least one subsystem based at least in part upon the alarm information;
   generating one or more alarm messages based at least in part on the one or more alarm events;
   classifying the one or more alarm messages into one or more classifying criteria; and
   displaying a subset of the one or more alarm messages based at least upon a selection of one or more classifying criteria.
2. The method of clause 1, wherein the alarm information comprises at least one of (i) historic alarm information or (ii) historic alarm events.
3. The method of any preceding clause, wherein the alarm information comprises real-time alarm information.
4. The method of any preceding clause, wherein determining one or more alarm events for each of the at least one subsystem based at least in part upon the alarm information includes assigning one or more time-stamps to each of the one or more alarm events.
5. The method of any preceding clause, further comprising:
   categorizing each of the one or more alarm messages using one or more classifying criteria.
6. The method of any preceding clause, wherein the classifying criteria comprises at least one of (i) a type of alarm message or (ii) a type of subsystem.
7. The method of any preceding clause, wherein the one or more alarm messages comprises information related to operational responsibility of at least one of (i) the at least one subsystem or (ii) the system.
8. The method of any preceding clause, wherein the alarm information comprises historic alarm information and real-time alarm information.
9. The method of any preceding clause, wherein determining one or more alarm events for each of the at least one subsystem based at least in part on the alarm information comprises comparing the historic alarm information to the real-time alarm information.
10. The method of any preceding clause, wherein the one or more alarm events comprises at least one of (i) a dynamic alarm event or (ii) a contextual alarm event.
11. A system for monitoring one or more subsystems, comprising:
   at least one memory configured to store computer-executable instructions; and
   at least one processor configured to access the at least one memory and execute the computer-executable instructions to:
      receive alarm information or information suitable for use in generating alarms from one or more sensors, devices or computing devices associated with a respective one of at least one subsystem within the system;
      determine one or more alarm events for each of the at least one subsystem based at least in part upon the alarm information;
      generate one or more alarm messages based at least in part on the one or more alarm events; and
      display a subset of the one or more alarm messages based at least upon a selection of one or more classifying criteria.
12. The system of any preceding clause, wherein the alarm information comprises at least one of (i) historic alarm information or (ii) historic alarm events.
13. The system of any preceding clause, wherein the alarm information comprises real-time alarm information.
14. The system of any preceding clause, wherein the computer-executable instructions to determine one or more alarm events for each of the at least one subsystem based at least in part upon the alarm includes assigning one or more time-stamps to at least one of (i) the alarm information or (ii) the one or more alarm events.
15. The system of any preceding clause, wherein the at least one processor is further configured to execute the computer-executable instructions to categorize each of the one or more alarm messages using one or more classifying criteria.
16. The system of any preceding clause, wherein the classifying criteria comprises at least one of (i) a type of alarm event or (ii) a type of subsystem.
17. The system of any preceding clause, wherein the one or more alarm messages comprises information related to operational responsibility of at least one of (i) the at least one subsystem or (ii) the system.
18. The system of any preceding clause, wherein the alarm information comprises historic alarm information and real-time alarm information.
19. The system of any preceding clause, wherein determining one or more alarm events for each of the at least one subsystem based at least in part on the alarm information comprises comparing the historic alarm information to the real-time alarm information.
20. The system of any preceding clause, wherein the one or more alarm events comprises at least one of (i) a dynamic alarm event or (ii) a contextual alarm event.

## Claims

1. A method (200) for monitoring a system, comprising:
receiving (205) alarm information or information suitable for use in generating alarms from one or more sensors, devices or computing devices associated with a respective one of at least one subsystem within the system;
determining (210) one or more alarm events for each of the at least one subsystem based at least in part upon the alarm information;
generating (215) one or more alarm messages based at least in part on the one or more alarm events;
classifying (220) the one or more alarm messages into one or more classifying criteria; and
displaying (225) a subset of the one or more alarm messages based at least upon a selection of one or more classifying criteria.

2. The method of claim 1, wherein the alarm information comprises at least one of (i) historic alarm information or (ii) historic alarm events.

3. The method of claim 1 or claim 2, wherein the alarm information comprises real-time alarm information.

4. The method of claim 1, 2 or 3 wherein determining (210) one or more alarm events for each of the at least one subsystem based at least in part upon the alarm information includes assigning one or more time-stamps to each of the one or more alarm events.

5. The method of any preceding claim, further comprising:
categorizing each of the one or more alarm messages using one or more classifying criteria.

6. The method of claim 5, wherein the classifying criteria comprises at least one of (i) a type of alarm message or (ii) a type of subsystem.

7. The method of any preceding claim, wherein the one or more alarm messages comprises information related to operational responsibility of at least one of (i) the at least one subsystem or (ii) the system.

8. The method of any preceding claim, wherein the alarm information comprises historic alarm information and real-time alarm information.

9. The method of claim 8, wherein determining (210) one or more alarm events for each of the at least one subsystem based at least in part on the alarm information comprises comparing the historic alarm information to the real-time alarm information.

10. The method of any preceding claim, wherein the one or more alarm events comprises at least one of (i) a dynamic alarm event or (ii) a contextual alarm event.

11. A system (100) for monitoring one or more subsystems (110), comprising:
at least one memory (154) configured to store computer-executable instructions; and
at least one processor (152) configured to access the at least one memory (154) and execute the computer-executable instructions to:
receive alarm information or information suitable for use in generating alarms from one or more sensors, devices or computing devices associated with a respective one of at least one subsystem within the system;
determine one or more alarm events for each of the at least one subsystem based at least in part upon the alarm information;
generate one or more alarm messages based at least in part on the one or more alarm events; and
display a subset of the one or more alarm messages based at least upon a selection of one or more classifying criteria.

12. The system of claim 11, wherein the computer-executable instructions are to perform the method of any one of claims 1 to 10.

13. The system of claim 11 or claim 12, wherein the computer-executable instructions to determine one or more alarm events for each of the at least one subsystem based at least in part upon the alarm includes assigning one or more time-stamps to at least one of (i) the alarm information or (ii) the one or more alarm events.
